# EUROPEAN PATENT APPLICATION

(11) **EP 4 835 562 A1**
(43) Date of publication of application: **04.11.2026**
(21) Application number: 25784936.4
(22) Date of filing: 11.07.2025
(51) Int. Cl.: G03B 9/06, H04N 23/55

(54) **APERTURE MODULE AND CAMERA MODULE INCLUDING SAME**

(30) Priority: 18.10.2024 KR 20240143335; 10.07.2025 KR 20250093311
(71) Applicant: LG Innotek Co., Ltd., Seoul 07796 (KR)
(72) Inventor: LEE, Jun Taek, Seoul 07796 (KR); KWON, Jae Wook, Seoul 07796 (KR); KO, Joong Yeol, Seoul 07796 (KR)
(74) Representative: Plasseraud IP
(86) International application number: PCT/KR2025/010219
(87) International publication number: WO 2026/084183

(57) **Abstract**

The present invention relates to a diaphragm module and a camera module including the same, and more particularly, to a diaphragm module having nine blades arranged in three layers, which is capable of minimizing a diffraction phenomenon.

## Description

### [Technical Field]

The present disclosure relates to an iris module and a camera module including the same, and more particularly, to an iris module including nine blades disposed in three layers to minimize diffraction.

### [Background Art]

The content described in this section merely provides background information regarding embodiments, and does not constitute the conventional art.

In recent years, cameras have been commonly integrated into portable electronic devices such as smartphones, tablets, and laptop computers. As competition to differentiate portable electronic devices has intensified, features of general digital cameras have increasingly been applied to cameras of portable electronic devices. Among such features, there is growing demand for bright and sharp images obtained by adjusting the amount of incident light using an iris configured to vary the size of an aperture.

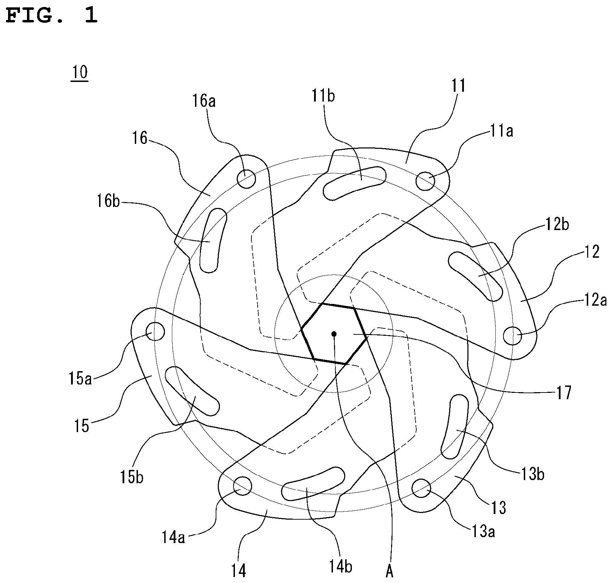

FIG. 1 is an exemplary view showing an iris 10 including six blades. A light-incident aperture 17 formed by a plurality of blades 11 to 16 has a symmetrical shape. That is, as shown, the hexagonal light-incident aperture 17 formed by the six blades 11 to 16 is point-symmetric with respect to the center A thereof. For example, a first blade 11 is point-symmetric to a fourth blade 14. A rotation-shaft hole 11a in the first blade 11 is point-symmetric to a rotation-shaft hole 14a in the fourth blade 14 with respect to a line L1, and a driving hole 11b in the first blade 11 is point-symmetric to a driving hole 14b in the fourth blade 14 with respect to the line L1. A second blade 12 is point-symmetric to a fifth blade 15, and a third blade 13 is point-symmetric to a sixth blade 16. The above symmetrical relationship is equally applicable to rotation-shaft holes 12a, 13a, 15a, and 16a and driving holes 12b, 13b, 15b, and 16b in the respective blades 12, 13, 15, and 16.

Accordingly, diffraction becomes more prominent. This phenomenon occurs not only in an iris module including six blades as shown in FIG. 1, but also in iris modules including an even number of blades, such as four or eight blades. In addition, if sufficient roundness close to a circular shape is not secured according to the rotation angles of the blades, diffraction may occur at straight edges. Furthermore, in order to achieve multistep operation, it is necessary to implement a light-incident aperture that is as circular as possible. The length of the blades increases to improve roundness. For example, in a six-blade configuration in which two blades are disposed in each of three layers or an eight-blade configuration in which two blades are disposed in each of two upper layers and two lower layers, with an intermediate separation layer interposed between the two upper layers and the two lower layers, overlapping spaces are present between the blades, resulting in increased thickness of the blade structure. Therefore, there is a need to develop an iris module that is advantageous in terms of miniaturization and slimness, thereby being suitable for use in portable electronic devices.

### [Disclosure]

### [Technical Problem]

An aspect of the present disclosure is to provide an iris module capable of minimizing diffraction.

Another aspect of the present disclosure is to provide an iris module capable of maximizing roundness of a light-incident aperture formed by rotation of blades.

A further aspect of the present disclosure is to provide a thin iris module suitable for use in portable electronic devices.

### [Technical Solution]

A camera module according to the present disclosure for accomplishing the above aspects may include an iris module, and the iris module may include a coil unit including a plurality of coils, a fixed unit having the coil unit disposed thereon, a ring magnet disposed to face the coil unit and configured to rotate about a first axis through interaction with the coil unit, a movable unit having the ring magnet disposed thereon, and a blade unit coupled to the fixed unit and the movable unit and forming a variable aperture. The ring magnet may include a plurality of N poles and a plurality of S poles alternately disposed. The blade unit may include a plurality of blade layers stacked in a direction parallel to the first axis, and each of the plurality of blade layers may include a plurality of blades. The number of coils may be greater than the number of blade layers, and a sum of the number of N poles and the number of S poles may be greater than the number of coils. The number of coils, the number of N poles, and the number of blade layers may be multiples of three.

An iris module according to an embodiment may include a support unit including a first opening overlapping a lens, a rotor disposed on the support unit so as to rotate about an optical axis and including a second opening overlapping the lens and the first opening, and a blade unit including nine blades disposed in a direction perpendicular to the optical axis in three layers so as to rotate in conjunction with rotation of the rotor to form a light-incident aperture varying in size.

In the iris module according to the present disclosure, among the nine blades, three blades disposed in a direction perpendicular to the optical axis in the same layer may be disposed such that a plurality of virtual lines connecting respective rotation-shaft holes to the optical axis forms an angle of 120° therebetween.

In the iris module according to the present disclosure, two blades disposed in different layers so as to be adjacent to each other in an optical-axis direction may be disposed such that a virtual line connecting a rotation-shaft hole in a blade in an upper layer to the optical axis and a virtual line connecting a rotation-shaft hole in a blade in a lower layer to the optical axis form an angle ranging from 35° to 45° therebetween.

In the iris module according to the present disclosure, a first angle formed by a first virtual line connecting a rotation-shaft hole in a blade disposed in a bottom layer in the optical-axis direction to the optical axis and a second virtual line connecting a rotation-shaft hole in a blade disposed in a middle layer in the optical-axis direction to the optical axis may be different from a second angle formed by a third virtual line connecting a rotation-shaft hole in a blade disposed in a top layer in the optical-axis direction to the optical axis and the second virtual line.

In the iris module according to the present disclosure, a difference between the first angle and the second angle may be less than 5°.

In the iris module according to the present disclosure, three blades disposed in a direction perpendicular to the optical axis in the same layer may not overlap each other in the optical-axis direction throughout the entire rotational range.

In the iris module according to the present disclosure, each of the blades disposed in an upper layer in the blade unit may overlap two of the blades disposed in a lower layer and may be supported by the two blades at all times.

In the iris module according to the present disclosure, the nine blades may be disposed on the rotor such that a separation distance between rotation-shaft holes and driving-shaft holes in respective blades is the longest when the light-incident aperture formed by the blade unit has the minimum size.

In the iris module according to the present disclosure, each of the nine blades may include a blade body including an inner surface adjacent to the optical axis and an outer surface. The inner surface of the blade body may have a curved portion, and the outer surface of the blade body may have at least one inflected portion.

In the iris module according to the present disclosure, when the amount of light incident on the lens is at a maximum, the amount of light incident on the lens may be determined by the inner surface of each of the blades adjacent to the rotation-shaft hole.

As the amount of light incident on the lens decreases from the maximum, the amount of light incident on the lens may be determined by the inner surface of the blade body adjacent to the optical axis.

An iris module according to another embodiment of the present disclosure may include a support unit including a first opening overlapping a lens, a rotor disposed on the support unit so as to rotate about an optical axis and including a second opening overlapping the lens and the first opening, and a blade unit configured to form a light-incident aperture in a direction perpendicular to an optical axis in conjunction with rotation of the rotor, the light-incident aperture having a bilaterally or vertically asymmetric shape with respect to the optical axis.

### [Advantageous Effects]

As is apparent from the above description, in the iris module according to the present disclosure, nine blades are divided such that three blades are disposed in each of three layers. Accordingly, the three blades in each layer do not overlap each other when the size of the light-incident aperture varies, thereby preventing malfunction of the iris. In addition, in the iris module according to the present disclosure, because the light-incident aperture formed by the operation of the blades is asymmetric with respect to the optical axis, diffraction becomes less prominent.

The number of coils and the number of N poles and S poles of the magnet for driving the blades may be designed as a multiple of the number of blade layers. For example, when the blades are disposed in three layers, the number of coils of the coil unit 800 for driving the blades and the number of N poles and S poles of the second magnet 710 for driving the blades are also determined to be multiples of three. When the number of coils is three, each blade layer is driven by one coil. When the number of coils is six, each blade layer is driven by two coils. The same configuration is applied to the second magnet 710. When the second magnet 710 includes three S poles and three N poles, each blade layer is driven by one S pole and one N pole. When the second magnet 710 includes six S poles and six N poles, each blade layer is driven by two S poles and two N poles. Accordingly, the number of coils and the number of magnets required to operate the blades are determined to be multiples of the number of blade layers. The aforementioned number of N poles and S poles of the magnet when viewed in a direction parallel to the optical axis refers to the number when viewed in top view. When the blades are disposed in four layers, the number of coils of the coil unit 800 for driving the blades and the number of N poles and S poles of the second magnet 710 for driving the blades are also determined to be multiples of four. The aforementioned number of N poles and S poles of the magnet when viewed in a direction parallel to the optical axis refers to the number when viewed in top view.

### [Description of Drawings]

FIG. 1 is an exemplary view showing an iris including six blades;
FIG. 2 is a perspective view showing a lens moving apparatus including an iris module according to an embodiment of the present disclosure;
FIG. 3 is an exploded perspective view of the lens moving apparatus shown in FIG. 2 with a cover exploded;
FIG. 4 is an exploded perspective view of the lens moving apparatus shown in FIG. 3 (excluding first to third covers);
FIGs. 5A to 5C are views showing an iris module according to an embodiment of the present disclosure, wherein FIG. 5A is a view showing a blade unit, FIG. 5B is a view showing a movable unit, and FIG. 5C is a view showing a fixed unit;
FIG. 6 is a bottom view of a coil unit of the fixed unit shown in FIG. 5C;
FIGs. 7A to 7D are plan views showing a magnetic field interference phenomenon in a lens moving apparatus according to a comparative example;
FIGs. 8A and 8B are plan views showing a magnetic field interference phenomenon in the lens moving apparatus including an iris module according to the embodiment;
FIGs. 9A to 9C are bottom views showing a plurality of coils, fixed shafts, and rolling members of the iris module according to the embodiment;
FIG. 10 is a perspective view showing the configuration of the iris module according to the present disclosure;
FIG. 11 is an exploded perspective view showing the configuration of the iris module according to the present disclosure;
FIGs. 12A and 12B are exemplary views showing the operational state of a blade unit in the iris module according to an embodiment of the present disclosure;
FIGs. 13A and 13B are exemplary views showing the operational state of the blade unit in the iris module according to another embodiment of the present disclosure;
FIG. 14 is an exemplary view showing the shape of a light-incident aperture formed by the iris module according to the present disclosure; and
FIG. 15 is an exemplary view showing various shapes of a light-incident aperture according to configurations of blades constituting an iris module.

### [Best Mode]

Various exemplary embodiments will now be described more fully with reference to the accompanying drawings, in which only some exemplary embodiments are shown. Specific structural and functional details disclosed herein are merely representative for the purpose of describing exemplary embodiments. The present disclosure, however, may be embodied in many alternative forms, and should not be construed as being limited to the exemplary embodiments set forth herein.

Accordingly, while exemplary embodiments of the disclosure are capable of being variously modified and taking alternative forms, embodiments thereof are shown by way of example in the drawings and will herein be described in detail. It should be understood, however, that there is no intent to limit the present disclosure to the particular exemplary embodiments disclosed. On the contrary, exemplary embodiments are to cover all modifications, equivalents, and alternatives falling within the scope of the disclosure.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of exemplary embodiments of the present disclosure.

It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present. Other words used to describe the relationship between elements should be interpreted in a like fashion (e.g. "between" versus "directly between", "adjacent" versus "directly adjacent", etc.). Similarly, it will be understood that, when an element is referred to as being "disposed on" another element, it may be directly disposed on the surface of the other element or may be disposed above the surface of the other element with a spacing distance therefrom.

The terminology used herein is for the purpose of describing particular embodiments only and is not intended to be limiting of exemplary embodiments of the disclosure. As used herein, the singular forms are intended to include the plural forms as well, unless the context clearly indicates otherwise. It will be further understood that the term "include" or "have", when used herein, specifies the presence of stated features, integers, steps, operations, elements, components, or combinations thereof, but do not preclude the presence or addition of one or more other features, integers, steps, operations, elements, components, or combinations thereof.

Unless otherwise defined, all terms used herein, which include technical or scientific terms, have the same meanings as those generally appreciated by those skilled in the art. The terms, such as ones defined in common dictionaries, should be interpreted as having the same meanings as terms in the context of pertinent technology, and should not be interpreted as having ideal or excessively formal meanings unless clearly defined in the specification.

In the following description, not all components required for an iris and a lens moving apparatus will be described, and only components necessary for implementing the present disclosure will be described. Configurations not specifically described herein may be configurations known to those skilled in the art or may be replaced with known technical configurations.

The present disclosure will be described using the Cartesian coordinate system (x-axis, y-axis, z-axis) for convenience of description. However, the present disclosure is not limited thereto and may also be described using other coordinate systems. In the Cartesian coordinate system, the x-axis, the y-axis, and the z-axis are perpendicular to each other, but the embodiments are not limited thereto. That is, the x-axis, the y-axis, and the z-axis may intersect each other obliquely.

In this case, the x-axis direction may be a concept including both the +x-axis direction and the -x-axis direction, the y-axis direction may be a concept including both the +y-axis direction and the -y-axis direction, and the z-axis direction may be a concept including both the +z-axis direction and the - z-axis direction.

The optical axis may be an optical axis of a lens mounted in a lens barrel. Alternatively, for example, the optical axis may be an axis perpendicular to an imaging region of an image sensor and passing through a center of the imaging region. The direction of the optical axis is represented by "OA," and a direction parallel or substantially parallel to the optical axis may be referred to as the "Z-axis direction." In the following description, it is assumed that the respective components are aligned with the optical axis, and the optical axis is defined as passing through the centers of the openings in the respective components. In addition, the term "a direction perpendicular to the optical axis" as used in the specification may refer to a concept including the x-axis direction and the y-axis direction. Alternatively, it may be used to refer to either the x-axis direction or the y-axis direction or may be used to refer to a direction other than the x-axis direction and the y-axis direction.

Hereinafter, an iris module according to the present disclosure will be described with reference to the accompanying drawings.

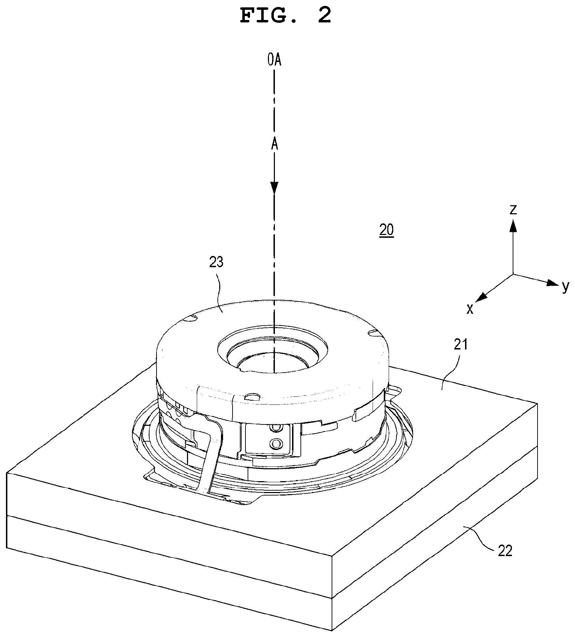

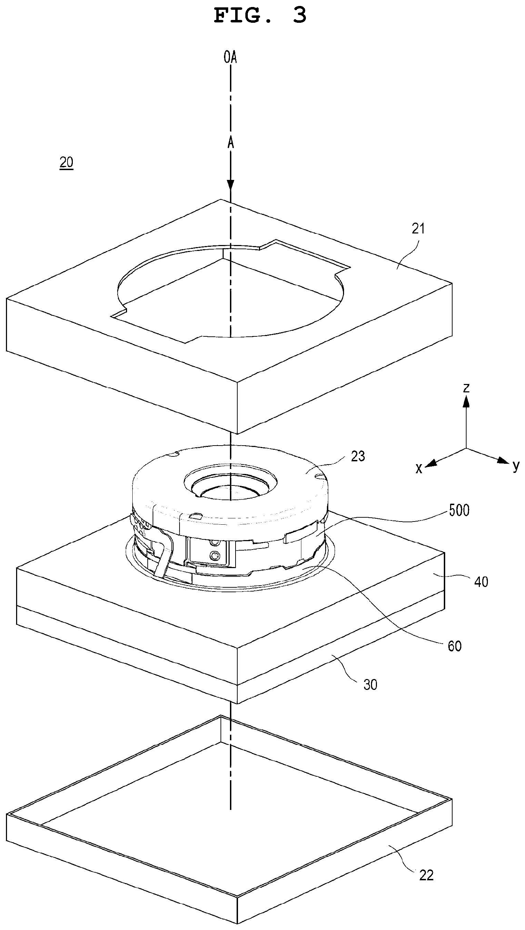

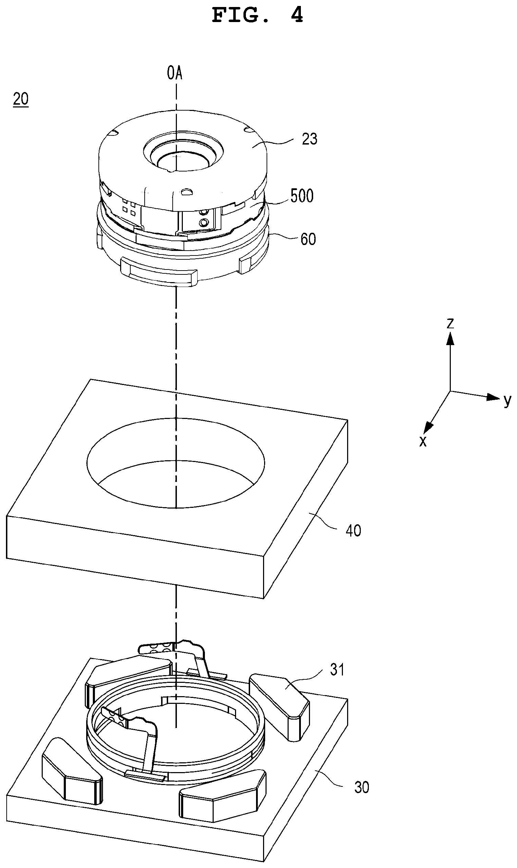

A lens moving apparatus 20 according to an embodiment of the present disclosure will be described below with reference to FIGs. 2 to 4. FIG. 2 is a perspective view showing a lens moving apparatus 20 including an iris module 500 according to an embodiment of the present disclosure. FIG. 3 is an exploded perspective view of the lens moving apparatus 20 shown in FIG. 2 with a cover exploded. FIG. 4 is an exploded perspective view of the lens moving apparatus 20 shown in FIG. 3 (excluding a first cover 21 to a third cover 23).

Referring to FIGs. 2 and 3, the lens moving apparatus 20 includes a first cover 21 and a second cover 22 that surround a substrate unit 30 and includes a lens module 60 and an iris module 500 that are disposed to protrude through an opening in the first cover 21. A third cover 23 may be disposed on an upper side of the iris module 500. The substrate unit 30 and a housing 40 disposed on the substrate unit 30 may be contained in an inner space defined by the first cover 21 and the second cove 22.

Referring to FIG. 4, the lens moving apparatus 20 may include the substrate unit 30 and the housing 40, which are sequentially stacked or arranged in the z-axis direction. The lens moving apparatus 20 may include a bobbin disposed in the housing 40 and may include a lens module 60, the iris module 500, and the third cover 23, which are sequentially stacked or disposed on the bobbin in the z-axis direction.

In addition, although not shown in the drawings, the lens moving apparatus may further include an upper elastic member that is divided into a plurality of parts and coupled to the bobbin and the housing 40 to elastically support movement of the bobbin in a direction parallel to the optical-axis direction.

In addition, although not shown in detail, the lens moving apparatus 20 according to the present disclosure may include a plurality of coils, a plurality of driving magnets, a plurality of position sensors, and a plurality of sensing magnets in order to perform an optical image stabilization (OIS) function and an autofocus function.

Here, the OIS function is a function of inhibiting the contour of a captured still image from being blurred due to vibration caused by shaking of a hand of a user when capturing the still image. In order to compensate for image shake caused by factors such as hand tremors of the user, the lens module 60 may be moved in a direction perpendicular to the optical axis OA. That is, the OIS function compensates for shaking that occurs during image capture due to hand tremors of the user or the like by applying a relative displacement corresponding to the shaking to the lens module 60.

In addition, the autofocus function is a function of automatically focusing an image of a subject on a surface of an image sensor. In order to automatically focus the image of the subject, the lens module 60 may be moved in a direction parallel to the optical axis OA. That is, the autofocus function applies a displacement for focusing on the subject to the lens module 60.

The substrate unit 30 may include a body and a first opening that penetrates the center of the body in the optical-axis direction. The first opening may have a length extending in the z-axis direction due to a protruding portion that protrudes from the body in the z-axis direction.

A plurality of AF magnets (hereinafter referred to as first magnets 31) and various circuit devices for driving the lens moving apparatus 20 may be disposed on the body of the substrate unit 30. The various circuit devices may include, for example, an image sensor, an integrated circuit in which an algorithm for performing the AF function and the OIS function is stored, and an iris module control board 810 configured to provide signals for control of the iris module 500. These components are merely examples and are not intended to be limiting, and additional components other than those described above may also be included.

The housing 40 includes a protruding portion protruding from an outer side thereof in the -z-axis direction. The housing 40 may be coupled to the substrate unit 30 and may define an inner space between the housing 40 and the substrate unit 30 due to the protruding portion. The defined inner space may accommodate the plurality of first magnets 31 and various circuit devices disposed on the body of the substrate unit 30 described above.

The substrate unit 30 and the housing 40 may include a plurality of insertion recesses into which the plurality of first magnets 31 may be coupled or inserted. The plurality of first magnets 31 may be disposed and fixed in a plurality of spaces defined by the plurality of insertion recesses in the substrate unit 30 and the housing 40, which are coupled to each other in the z-axis direction. The length of the plurality of spaces in the z-axis direction may be equal to or greater than the length of the first magnets 31 in the z-axis direction.

The housing 40 may be disposed inside the first cover 21 and may be disposed between the first cover 21 and the bobbin. The housing 40 may accommodate the bobbin. An outer side surface of the housing 40 may be spaced apart from an inner surface of a side plate of the first cover 21. Due to the spacing between the housing 40 and the first cover 21, the housing 40 may move in a horizontal direction with respect to the optical axis. Accordingly, the above-described optical image stabilization (OIS) function may be performed.

The housing 40 may have an overall hollow pillar shape. For example, the housing 40 may include a polygonal (e.g., rectangular or octagonal) or circular opening. The opening in the housing 40 may be a through-hole that penetrates the housing 40 in the optical-axis direction.

The bobbin may be disposed in the housing 40 (e.g., the opening in the housing 40).

The bobbin may include an opening for mounting of a plurality of lenses or the lens module 60 that includes a plurality of lenses and a lens barrel.

The opening in the bobbin may be a through-hole that penetrates the bobbin in the optical-axis direction and extends in the z-axis direction. The shape of the opening in the bobbin may be circular, elliptical, or polygonal, but the disclosure is not limited thereto.

A lens may be directly mounted in the opening in the bobbin, but the disclosure is not limited thereto. In other embodiments, a lens barrel for mounting or coupling at least one lens may be coupled to or mounted in the opening in the bobbin. The lens or the lens barrel may be coupled to an inner circumferential surface of the bobbin in various ways.

A coil receiving recess is formed in a rear surface of the bobbin to mount a coil therein. The coil may be fixed in the coil receiving recess without being separated therefrom by means of a fixing protrusion or the like.

The coil disposed on the rear surface of the bobbin enables the bobbin to move in the optical-axis direction within the housing 40 through electromagnetic interaction with the plurality of first magnets 31 disposed on the substrate unit 30. Accordingly, the above-described autofocus (AF) function may be performed.

In order to enable the bobbin to move in the optical-axis direction, an N pole 702 and an S pole 701 of each of the first magnets 31 may be disposed in the z-axis direction, and the coil coupled to the bobbin may be disposed to face side surfaces of the first magnets 31 that face the optical axis.

The lens module 60 may include a plurality of lenses or a lens barrel in which a plurality of lenses is disposed.

The plurality of lenses may include two or more lenses. The plurality of lenses may be disposed or arranged within the lens barrel in a manner of being sequentially stacked in the optical-axis direction by means of coupling protrusions or the like for alignment or self-alignment.

Although the iris module 500 is shown in FIGs. 2 to 4 as being disposed on the upper side of the lens module 60, the embodiments are not limited thereto. The following description of the iris module 500 is also applicable to a configuration in which the iris module 500 is disposed between the plurality of lenses.

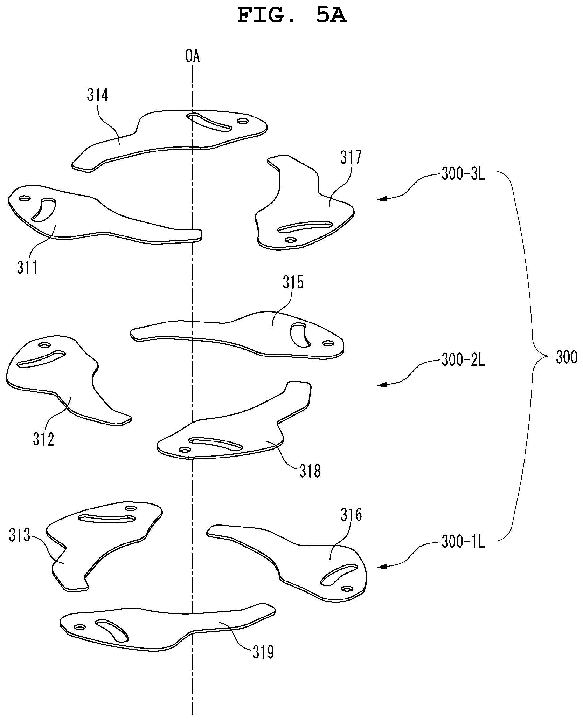

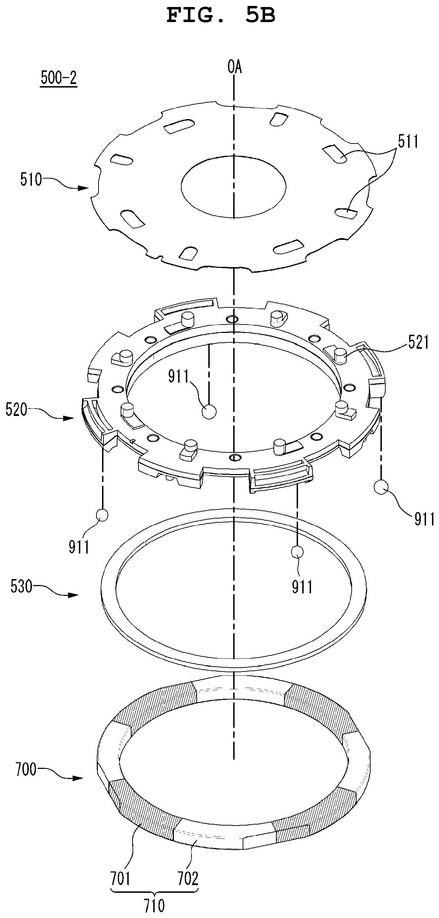

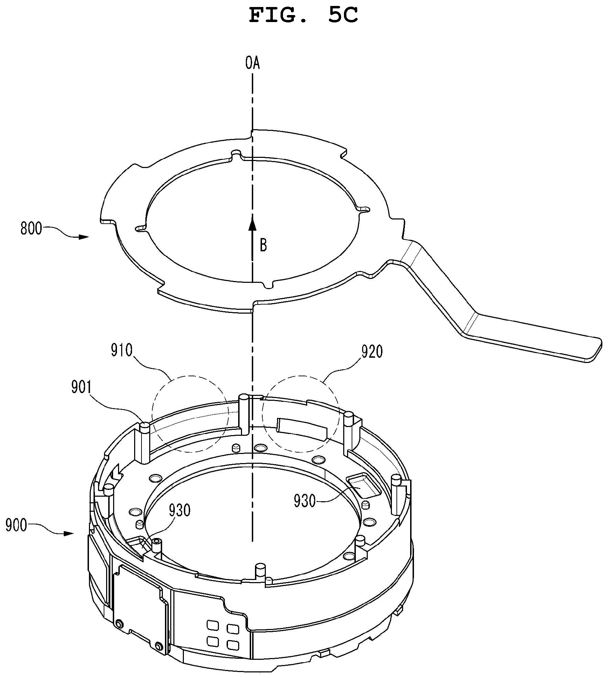

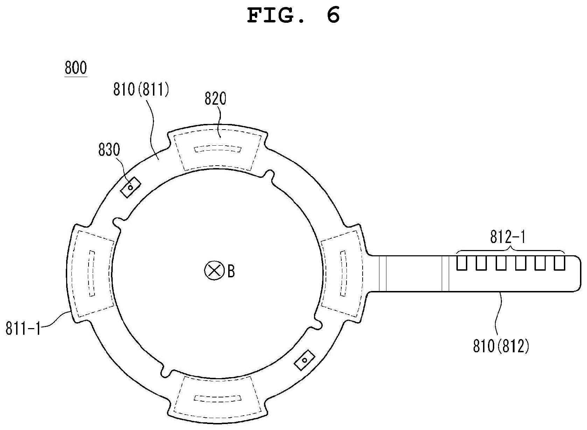

Hereinafter, the iris module 500 according to the embodiment of the present disclosure will be described with reference to FIGs. 5A to 6. FIGs. 5A to 5C are views showing the iris module 500 according to the embodiment of the present disclosure. FIG. 5A is a view showing a blade unit 300, FIG. 5B is a view showing a movable unit 500-2, and FIG. 5C is a view showing a fixed unit 500-3. FIG. 6 is a bottom view of a coil unit 800 of the fixed unit 500-3 shown in FIG. 5C.

The iris module 500 may broadly include a blade unit 300, a movable unit 500-2, and a fixed unit 500-3. The third cover 23 may be a part of the iris module 500.

The blade unit 300 according to the present disclosure includes a total of nine blades disposed in a direction perpendicular to the optical axis in three layers 300-1L, 300-2L, and 300-3L. Three blades are disposed in each layer. A third blade 313, a sixth blade 316, and a ninth blade 319 are disposed in a first layer 300-1L, which is the bottom layer. A second blade 312, a fifth blade 315, and an eighth blade 318 are disposed in a second layer 300-2L, which is the middle layer. A first blade 311, a fourth blade 314, and a seventh blade 317 are disposed in a third layer 300-3L, which is the top layer.

The third cover 23 may be coupled to the fixed unit 500-3 to define an internal space, and the blade unit 300 and the movable unit 500-2 may be disposed in the defined internal space.

In the iris module 500, the fixed unit 500-3 may be an element or a component that is directly or indirectly coupled to the lens module 60 and does not rotate with respect to the optical axis. In the iris module 500, the fixed unit 500-3 may be an element or a component that remains fixed when the movable unit 500-2 is moved or the blade unit 300 is driven. In the iris module 500, the fixed unit 500-3 may alternatively be referred to as a "fixed body."

Referring to FIG. 5C, in the iris module 500, the fixed unit 500-3 may include a stator 900 (alternatively referred to as a "fixed element") and a coil unit 800. These components are merely examples and are not intended to be limiting, and other components, such as a position sensor, a temperature sensor, a fixing member, and a reinforcement member, may be further included. In the present disclosure, although the third cover 23 is described as a separate component, it may alternatively be considered as being included in the fixed unit 500-3.

The stator 900 includes a disc-shaped body having an opening and a side surface protruding in the z-axis direction from an outer edge of the body. The side surface and the body include fixed shafts 901 protruding in the z-axis direction. The fixed shafts 901 are portions of the stator 900 that protrude the farthest in the z-axis direction. The fixed shafts 901 are coupled to, connected to, inserted into, or pass through fixed-shaft holes 613 in a plurality of blades 311 to 319 to be described later to form the rotational centers of the respective blades 311 to 319.

The fixed shafts 901 may be disposed point-symmetrically with respect to the optical axis, and the number of fixed shafts 901 may be equal to the number of blades 311 to 319.

Spaces between the fixed shafts 901 may include first spaces 910 and second spaces 920.

The first spaces 910 may include guide grooves that provide paths along which rolling members 911 to be described later are disposed and moved. Accordingly, the first spaces 910 may include protruding portions that protrude in the optical-axis direction from the side surface and in which the guide grooves are disposed. The number of first spaces 910 may be equal to the number of rolling members 911.

The second spaces 920 may not include protruding portions, unlike the first spaces 910. At least a portion of each of a plurality of coils 820 of the coil unit 800 to be described later may be disposed in a respective one of the second spaces 920. Accordingly, the number of second spaces 920 may be equal to the number of coils 820.

In addition, the second spaces 920 may include through-holes formed in the side surface and the body to allow the substrate 810 of the coil unit 800 to pass therethrough. The substrate 810 of the coil unit 800 may include a ring-shaped first substrate 811 on which the plurality of coils 820 is disposed and a second substrate 812 that extends from the first substrate 811. A terminal unit 812-1 configured to apply external voltage to the plurality of coils 820 is disposed on the second substrate 812. The terminal unit 812-1 may be directly or indirectly connected to a circuit device of the above-described substrate unit 30. To this end, the second substrate 812 may pass through the stator 900 through the through-hole to be connected to the substrate unit 30 or the upper elastic member disposed below the iris module 500.

In addition, the body of the stator 900 includes recessed portions 930 recessed in the -z-axis direction. At least a portion of a sensor (e.g., a position sensor 830) disposed on the lower surface of the coil unit 800 to be described later may be included in each recessed portion 930. Accordingly, the number of recessed portions 930 may be equal to the number of sensors.

The coil unit 800 may include a plurality of coils 820, a substrate 810 (alternatively referred to as a "circuit board 810") on which the plurality of coils 820 is disposed, and a position sensor 830 disposed between the plurality of coils 820 on the substrate 810 (however, the disclosure is not limited thereto, and various sensors such as a temperature sensor may be disposed). In addition, the substrate 810 may further include a first terminal connected to the position sensor, a second terminal connected to an external power source or the like, and circuit elements (not shown in the drawings) configured to interconnect the second terminal, the first terminal, and the plurality of coils 820.

In addition, the coil unit 800 may further include a protective material. FIG. 6 shows the coil unit 800 in which the substrate 810 and the plurality of coils 820 are covered by and disposed within the protective material. The protective material may be a photo solder resist (PSR), but the disclosure is not limited thereto. However, the first terminal and the second terminal may be exposed to be electrically connected to the position sensor and the external power source, respectively, rather than being covered by the protective material.

When the blades are disposed in three layers, the number of coils of the coil unit 800 for driving the blades and the number of N poles and S poles of the second magnet 710 for driving the blades are also determined to be multiples of three. When the number of coils is three, each blade layer is driven by one coil. When the number of coils is six, each blade layer is driven by two coils. The same configuration is applied to the second magnet 710. When the second magnet 710 includes three S poles and three N poles, each blade layer is driven by one S pole and one N pole. When the second magnet 710 includes six S poles and six N poles, each blade layer is driven by two S poles and two N poles. Accordingly, the number of coils and the number of magnets required to operate the blades are determined to be multiples of the number of blade layers. The aforementioned number of N poles and S poles of the magnet when viewed in a direction parallel to the optical axis refers to the number when viewed in top view.

As described above, the substrate 810 may include a first substrate 811 having a ring or disc shape and a second substrate 812 extending from the second substrate 812.

The plurality of coils 820, the first terminal, the position sensor 830, and at least some of the circuit elements may be disposed on the first substrate 811, and the second terminal and the remaining ones of the circuit elements may be disposed on the second substrate 812.

The first substrate 811 may include protruding portions 811-1 that protrude in the radial direction at positions at which the coils are disposed and have a shape corresponding to the shape of the coils when viewed in the z-axis direction. These protruding portions 811-1 may be disposed in the second spaces 920 in the stator 900 described above. This structure may enable the coil unit 800 to be fixed within the stator 900 without being rotated.

In addition, each of the plurality of coils 820 may include at least one of an upper pattern coil disposed on an upper surface of the substrate 810 or a lower pattern coil disposed on a lower surface of the substrate 810. When both the upper pattern coil and the lower pattern coil are included, the upper pattern coil and the lower pattern coil may be electrically connected to each other through a via-hole formed through the substrate 810.

The upper pattern coil or the lower pattern coil may include a hollow portion and may include a spiral pattern shape extending outward and inward. The spiral pattern may be a pattern in which the pattern coil extends alternately in the circumferential direction and the radial direction. The via-hole may be formed on a side of the hollow portion, that is, at the innermost side of the pattern coil.

The magnitude of the thrust that rotates the movable unit 500-2 may be adjusted by adjusting the size or number of coils or the number of turns of the coils.

In addition, the coil unit 800 may include a position sensor configured to detect the magnetic field of a ring magnet 700, thereby detecting the rotational displacement of the ring magnet or a rotor 200. For example, the position sensor may be disposed on or coupled to the lower surface or the upper surface of the substrate 810.

For example, the position sensor may be a Hall sensor, a driver IC including a Hall sensor, an anisotropic magneto-resistive (AMR) sensor, a giant magneto-resistive (GMR) sensor, or a tunnel magneto-resistive (TMR) sensor.

For example, when the position sensor is a Hall sensor or a TMR sensor, it may be advantageous to provide two or more position sensors in order to secure high linearity with respect to the rotational displacement of the ring magnet 700. In particular, it may be advantageous that two position sensors 830 be disposed asymmetrically with respect to the optical axis, rather than being disposed symmetrically to face each other.

In the iris module 500, the movable unit 500-2 may be an element or a component that is moved or rotated relative to the fixed unit 500-3. In the iris module 500, the movable unit 500-2 may alternatively be referred to as a "rotatable unit."

For example, in the iris module 500, the movable unit 500-2 may include a rotor 200. In addition, the movable unit 500-2 may include a component coupled to the rotor 200, for example, at least one of a support plate 510, a ring magnet 700 (second magnet 700), or a yoke 530. In the present disclosure, although the blade unit 300 is described as a separate component, it may alternatively be considered as being included in the movable unit 500-2. These components are merely examples and are not intended to be limiting, and other components may be further included.

The support plate 510 may serve to support the blades, and the yoke 530 may serve to enable the second magnet 700 to be attached to the rotor 200 and to allow the magnetic force of the second magnet 700 to be oriented toward the coil unit 800.

The rotor 200 includes moving shafts 521 protruding in the z-axis direction. The moving shafts 521 may be disposed point-symmetrically with respect to the optical axis, and the number of moving shafts 521 may be equal to the number of blades 311 to 319. Accordingly, the number of moving shafts 521 may also be equal to the number of fixed shafts 901. The moving shafts 521 may be coupled to, connected to, inserted into, or pass through moving-shaft holes 612 in the plurality of blades 311 to 319 to be described later, thereby enabling each of the plurality of blades 311 to 319 to rotate about a respective one of the fixed shafts 901.

The second magnet 700 included in the movable unit 500-2 will be described later.

The blade unit 300 may include a plurality of blades 311 to 319. Although an upper layer of four blades 610 and a lower layer of four blades 610 are illustrated in FIG. 5A as being disposed with a blade separation plate 620 interposed therebetween, the embodiments are not limited thereto. That is, the blade separation plate 620 may or may not be included, and the number of blades 311 to 319 may be greater than or equal to eight or may be less than or equal to eight. In addition, the blades may be disposed in a single layer or may be disposed in two or more layers.

The plurality of blades 311 to 319 may be disposed in an alternating or stacked manner to form a variable aperture 611 (hereinafter alternatively be referred to as a "second opening"). As shown in FIG. 5A, when the blades are disposed in multiple layers, each layer of blades may form the variable aperture 611.

Each of the plurality of blades 311 to 319 may include an inner circumferential surface that is at least partially bent or curved. For example, the inner circumferential surface of each of the plurality of blades 311 to 319 may include a curved or concave portion. For example, the plurality of blades 311 to 319 may be disposed in a rounded shape such that the curved or concave portion of each of the plurality of blades 311 to 319 is directed toward the optical axis.

The shape of the inner circumferential surface of each of the plurality of blades 311 to 319 may determine the shape of the variable aperture 611. When viewed from above, the shape of the variable aperture 611 may be a circular shape, a polygonal shape, or a polygonal shape having curved edges.

Although the variable aperture 611 does not necessarily have a circular shape, it may be advantageous for the variable aperture 611 to have a circular shape in order to reduce light spreading, light splitting, or flare. The number of blades required to make the variable aperture 611 circular may vary depending on the curvatures of the inner circumferential surfaces of the plurality of blades 311 to 319.

Each of the plurality of blades 311 to 319 may include a moving-shaft hole 612 into which or through which the moving shaft 521 of the movable unit 500-2 is inserted or passes and a fixed-shaft hole 613 into which or through which the fixed shaft 901 of the fixed unit 500-3 is inserted or passes. The moving-shaft hole 612 may alternatively be referred to as a "driving-shaft hole," a "rotation-shaft hole," a "coupling hole," a "guide hole," or a "first hole" (or "second hole"). The fixed-shaft hole 613 may alternatively be referred to as a "rotation-shaft hole," a "coupling hole," or a "second hole" (or "first hole").

The moving-shaft hole 612 may be a hole extending in a direction in which the moving shaft 521 moves, with the fixed shaft 901 fitted into the fixed-shaft hole 613. That is, the moving-shaft hole 612 may correspond to the path along which the moving shaft 521 moves. For example, the moving-shaft hole 612 may extend to define the movement path of the moving shaft 521. For example, the moving-shaft hole 612 may extend or be formed to be inclined in the rotational direction of the movable unit 500-2.

As the movable unit 500-2 rotates about the optical axis with the moving shaft 521 and the fixed shaft 901 fitted into the moving-shaft hole 612 and the fixed-shaft hole 613, respectively, each of the plurality of blades 311 to 319 may move or rotate about the corresponding fixed shaft 901 within a predetermined range (e.g., the range in which the moving-shaft hole 612 extends).

The size (e.g., diameter) of the variable aperture 611 formed by the plurality of blades may vary depending on movement of the plurality of blades 311 to 319 and the bent or curved inner circumferential surfaces of the respective blades 610. Variable apertures 611 having different sizes may be implemented by controlling the movement of the plurality of blades 311 to 319.

The iris module 500 may include a rolling member 911 disposed between the movable unit 500-2 (e.g., the rotor 200) and the fixed unit 500-3 (e.g., the stator 900) in order to facilitate rotation or movement of the movable unit 500-2 (e.g., the rotor 200). For example, at least a portion of the rolling member 911 may be in contact with the rotor 200. In addition, for example, at least another portion of the rolling member 911 may be in contact with the stator 900.

The rolling member 911 may reduce friction between the rotor 200 and the stator 900 by performing rolling or sliding motion between the rotor 200 and the stator 900, thereby facilitating movement of the rotor 200 and reducing driving current or power consumption required to move the rotor 200.

The rolling member 911 may alternatively be referred to as a ball, a ball member, or a ball bearing. For example, the rolling member 911 may be made of metal, plastic, or resin, but the disclosure is not limited thereto. The rolling member 911 may have a circular shape and may have a diameter large enough to support movement of the rotor 200 (the movable unit 500-2).

For example, the rolling member 911 may include a plurality of balls. In the embodiment of the present disclosure, the number of rolling members 911 is four. However, in other embodiments, the number of rolling members 911 may be two, three, or five or more. For example, the rolling member 911 may include a plurality of balls having different sizes.

The rotor 200 and the stator 900 may include at least one guide groove to facilitate placement or seating of the rolling member 911 and to guide movement of the rolling member 911. The guide groove may alternatively be referred to as a "groove" or a "path groove." For example, the number of guide grooves may be equal to the number of rolling members 911. For example, the guide grooves in the rotor 200 and the guide grooves in the stator 900 may face each other. The rotor 200 and the stator 900 may be disposed vertically, so that a guide space capable of accommodating the rolling member 911 may be defined vertically.

The iris module 500 (e.g., the movable unit 500-2) may include a ring magnet 700 (second magnet 700) that rotates about the optical axis.

The ring magnet 700 may face or overlap the plurality of coils 820 of the coil unit 800 in the optical-axis direction, and may move or rotate within a predetermined range (e.g., defined by the range in which the moving-shaft hole 612 extends) about the optical axis through electromagnetic interaction with the plurality of coils 820. The ring magnet 700 may be fixedly coupled to the lower surface of the rotor 200 and thus may rotate the rotor 200.

The ring magnet 700 may have an annular shape having a hollow portion. In addition, the ring magnet 700 may include a flat portion 700A having a flat surface formed on at least a portion of the outer circumferential surface. The rotor 200 may include a protruding portion 200A including a flat portion 200B facing the flat portion 700A of the ring magnet 700. The flat shape of the ring magnet 700 defined by the flat portion 700A may correspond to the lower surface shape of the rotor 200 defined by the protruding portion 200A. The protruding portion 200A of the rotor 200 may serve to guide the ring magnet 700 to be assembled or coupled at a correct position when the ring magnet 700 is coupled to the rotor 200 and may serve to prevent rotation of the ring magnet 700 within the rotor 200.

The number of flat portions 200A may be one or more. The number of flat portions 200A may be determined based on the number of protruding portions 200A or flat portions 200B of the rotor 200, which may vary depending on the design of the rotor 200. In addition, referring to FIG. 4B, a plurality of flat portions 700A is symmetrically disposed, and the center of each flat portion 700A overlaps the contact surface between an N pole 702 and an S pole 701 of the ring magnet. However, this configuration is merely an example, and the disclosure is not limited thereto.

The ring magnet 700 may include a plurality of magnet units 710.

Each magnet unit may be a unipolar magnet including an N pole or an S pole, a bipolar magnet including an N pole and an S pole disposed in the circumferential direction, a bipolar magnet including an N pole and an S pole disposed in a direction parallel to the optical axis, or a quadrupolar magnet including N poles and S poles alternately disposed in the circumferential direction and the direction parallel to the optical axis. Hereinafter, for convenience of description and illustration, the magnet unit 710 will be described as a bipolar magnet including an N pole 702 and an S pole 701 disposed in the circumferential direction.

The number of magnet units 710 may be two or three or more. In addition, each magnet unit 710 may be a bipolar magnet including an N pole 702 and an S pole 701.

The plurality of magnet units 710 may be disposed such that the N poles 702 and the S poles 701 thereof are alternately arranged in the circumferential direction to form a ring shape. That is, the portions of two adjacent magnet units 710 that are in contact with each other may have opposite polarities. The ring shape viewed from above may be a circular or polygonal shape including a hollow portion. Although the circular ring shape is illustrated in the embodiment, the disclosure is not limited thereto.

The ring magnet 700 may be configured such that the respective poles are disposed symmetrically with respect to the center of the ring magnet 700. As a result, the ring magnet 700 may have the following characteristics.

Regardless of whether the number of magnet units 710 constituting the ring magnet 700 is an odd number or an even number, the total number of poles constituting the ring magnet 700 may be an even number (the number of magnet units 710 × 2 poles).

An angle formed by the centers of the magnet units 710 with respect to the center of the ring magnet 700 may be equal to an angle formed by contact surfaces between the magnet units 710. In addition, the angle formed by the centers of the magnet units 710 may be equal to an angle formed by the centers of adjacent S poles 701 or an angle formed by the centers of adjacent N poles 702.

Furthermore, angles between the centers of the respective poles (including both the N poles 702 and the S poles 701) constituting the ring magnet 700 may be equal to each other (the term "equal" refers to values that are identical within a margin of error). In addition, the angles between the centers of the respective poles 701 and 702 may be equal to angles formed by the contact surfaces between the respective poles 701 and 702. The angles between the contact surfaces between the N poles 702 and the S poles 701 may be equal to the angles between the centers of the N poles 702 and the S poles 701.

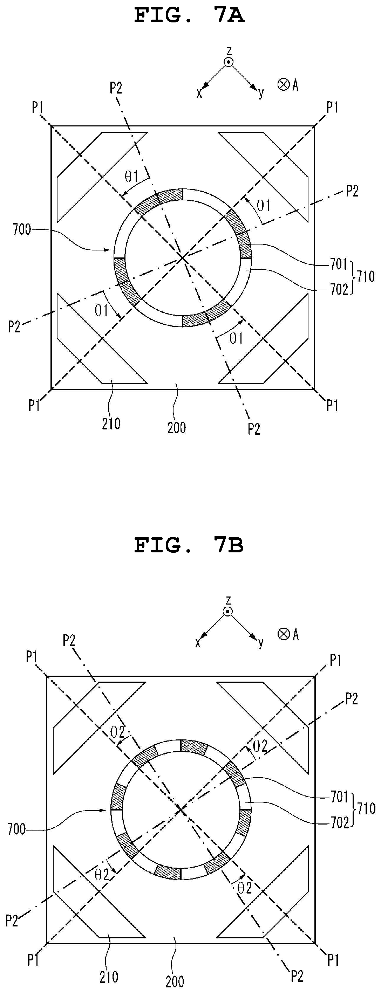

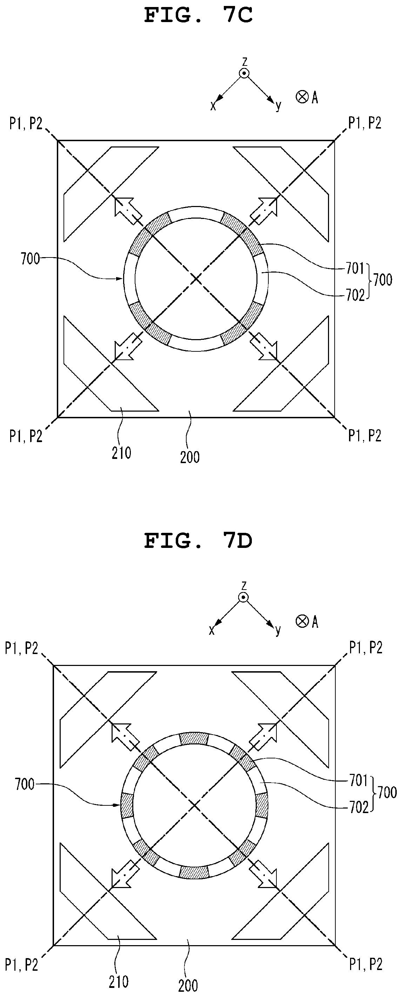

In addition, the center of each of the magnet units 710 may correspond to the center of the N pole 702 or the S pole 701 included in the ring magnet 700 or the center of the contact surface between adjacent magnet units 710. Hereinafter, magnetic field interference in a lens moving apparatus 10 according to a comparative example will be described with reference to FIGs. 7A to 7D. FIGs. 7A to 7D are plan views showing the lens moving apparatus 10 including the iris module 500 when viewed from direction A, in which illustration of the components other than the substrate unit 30, the first magnet 31, and the second magnet 700, which is the ring magnet, is omitted. FIGs. 7A and 7C show a case in which the number of magnet units 710 is four (8 poles), and FIGs. 7B and 7D show a case in which the number of magnet units 710 is eight (16 poles).

Referring to FIGs. 3 and 4, the first magnet 31 and the second magnet 700 do not overlap each other in a direction perpendicular to the optical axis (e.g., in the x-axis direction or the y-axis direction). However, the embodiments are not limited thereto. At least a portion of the second magnet 700 may overlap the first magnet 31 in a direction perpendicular to the optical axis.

As described above, the two poles of the first magnet 31 may be disposed in the z-axis direction. Because the second magnet 700 is positioned close to the upper side of the first magnet 31, the pole of the first magnet 31 located at an upper position may exert magnetic field interference on the second magnet 700 regardless of whether the first magnet 31 and at least a portion of the second magnet 700 overlap each other in a direction perpendicular to the optical axis.

Hereinafter, a case in which the first magnet 31 has an N pole 702 on the upper side and an S pole 701 on the lower side will be described. In the second magnet 700 shown in FIGs. 7A to 9, hatched portions represent the S poles 701. It is apparent that the following description is equally applicable to a case in which hatched portions correspond to the N poles 702 and non-hatched portions correspond to the S poles 701. The N pole 702 of the second magnet 700 may generate repulsive force with the N pole of the first magnet 201, and the S pole 701 of the second magnet 700 may generate attractive force with the N pole of the first magnet 201. Accordingly, the second magnet 700 may tend to rotate such that the S pole 701 thereof faces the N pole of the first magnet 201.

In addition, for convenience of description and better understanding, when viewed in a direction parallel to the optical axis, virtual lines passing through the optical axis and the centers of the first magnets 31 are denoted by P1, and virtual lines passing through the optical axis and the centers of the S poles 701 of the second magnet 700 are denoted by P2. The number of lines P1 may be equal to the number of first magnets 31, and the number of lines P2 may be equal to the number of S poles 701 of the second magnet 700 (equal to the number of magnet units 710). Virtual lines passing through the optical axis and the centers of the respective magnet units 710 may completely overlap the lines P2 as the second magnet 700 rotates about the optical axis.

Referring to FIGs. 7A and 7B, the upper pole (i.e., N pole 702) of the first magnet 31 may generate attractive force with the S pole 701 of the second magnet 700, thereby generating rotational force by which the S pole 701 of the second magnet 700 is oriented in the x-axis direction or the y-axis direction. Accordingly, in the case shown in FIG. 7A, the second magnet 700 receives force such that the lines P2 rotate by θ1, and in the case shown in FIG. 7B, the second magnet 700 receives force such that the lines P2 rotate by θ2. As a result, as shown in FIGs. 7C and 7D, the lines P1 and the lines P2 may completely overlap each other. In this case, even when the second magnet 700 receives Lorentz force generated by the coils, the second magnet 700 may become fixed without rotating due to the attractive force between the first magnet 31 and the second magnet 700.

As shown in FIGs. 7A and 7B, when the number of magnet units 710 constituting the second magnet 700 within an angle between adjacent lines P1 is a multiple of a natural number (this may correspond to a case in which a product of the number of first magnets 31 and a natural number is equal to the number of magnet units 710 constituting the second magnet 700), at least some of the lines P2 overlap all the lines P1. In this case, the magnetic field interference with the first magnet 31 may be maximized, potentially hindering operation of the iris module 500.

Therefore, in the present disclosure, in order to reduce or prevent such magnetic field interference, a structure in which some or all of the lines P1 intersect the lines P2, rather than overlapping the lines P2, is proposed.

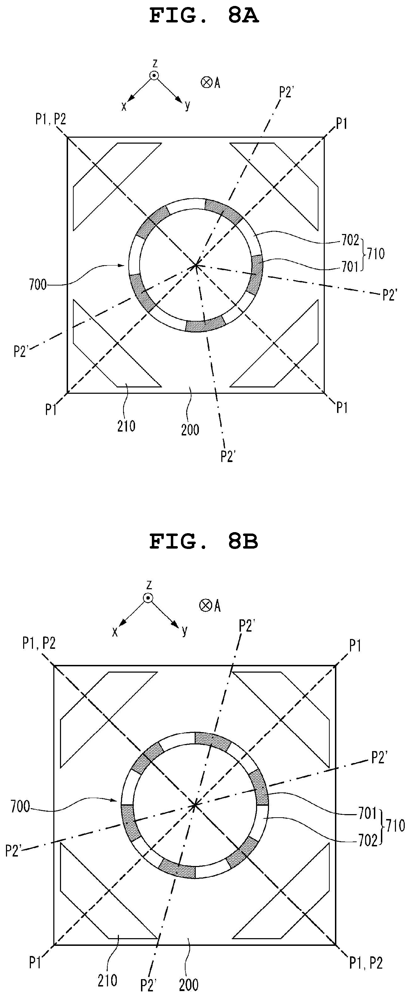

This will be described with reference to FIGs. 8A and 8B. Similar to FIGs. 7A and 7B, FIGs. 8A and 8B are plan views of the lens moving apparatus 10 according to the embodiment when viewed from direction A, in which illustration of the components other than the substrate unit 30, the first magnet 31, and the second magnet 700 is omitted. FIG. 8A shows a case in which the number of magnet units 710 is five (10 poles), and FIG. 8B shows a case in which the number of magnet units 710 is six (16 poles).

When the number of first magnets 31 is four and when the number of magnet units 710 is not a multiple of four, for example, when the number of magnet units 710 is five or six, only some of the lines P1 may overlap some of the lines P2, as shown in the drawings. In the case shown in FIG. 8A, only one line P1 may overlap the line P2, and in the case shown in FIG. 8B, only two lines P1 may overlap some of the lines P2. In FIGs. 8A and 8B, a line among the lines P2 that does not overlap the line P1 is denoted by P2'.

In such cases, unlike the cases shown in FIGs. 7A and 7B, not all the lines P1 overlap the lines P2. Therefore, magnetic field interference with the first magnet 31 may be reduced, and accordingly, the operation of the iris module 500 driven by the coils may not be affected even when some of the lines P1 overlap the lines P2.

In order to ensure that not all the lines P1 overlap the lines P2, an angle between adjacent lines P1 needs to be different from an angle between two lines P2. This means that a product of the angle between adjacent lines P2 and a natural number needs to be different from an angle between adjacent lines P1. The number of lines P1 is equal to the number of first magnets 31, and the angle between adjacent lines P1 is a value obtained by dividing 360 degrees by the number of first magnets 31. This configuration is equally applied to the second magnet 700. The condition under which not all the lines P1 overlap the lines P2 may correspond to a case in which the number of magnet units 710 constituting the second magnet 700 within the angle between adjacent lines P1 is not a multiple of a natural number or a case in which a product of the number of first magnets 31 and a natural number is not equal to the number of magnet units 710 constituting the second magnet 700.

Accordingly, for example, when the number of lines P1 (the number of first magnets 31) is four, the number of second virtual lines (the number of S poles 701 of the second magnet 700 or the number of magnet units 710) may be three, five, six, seven, nine, or eleven.

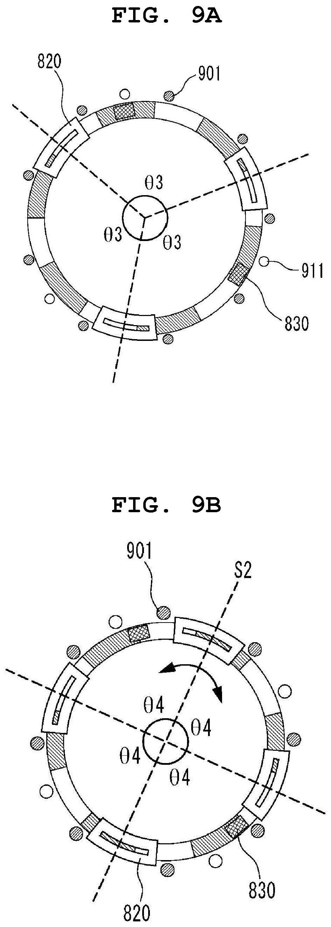

Hereinafter, the design of the coils, the fixed shafts 901, and the rolling members depending on the number of magnet units 710 will be described with reference to FIGs. 9A to 9C. FIGs. 9A to 9C are plan views of the iris module 500 when viewed from direction A, in which illustration of the components other than the second magnet 700, the plurality of coils 820, the position sensors 830, the fixed shafts 901, and the rolling members 911 is omitted.

In FIGs. 9A to 9C, the hatched circles represent the fixed pins, the white circles represent the rolling members, and the checkered rectangles represent the position sensors 830.

The number of coils 820 may be determined based on the number of magnet units 710. The number of coils 820 may be two or may be equal to the number of poles constituting the second magnet 700.

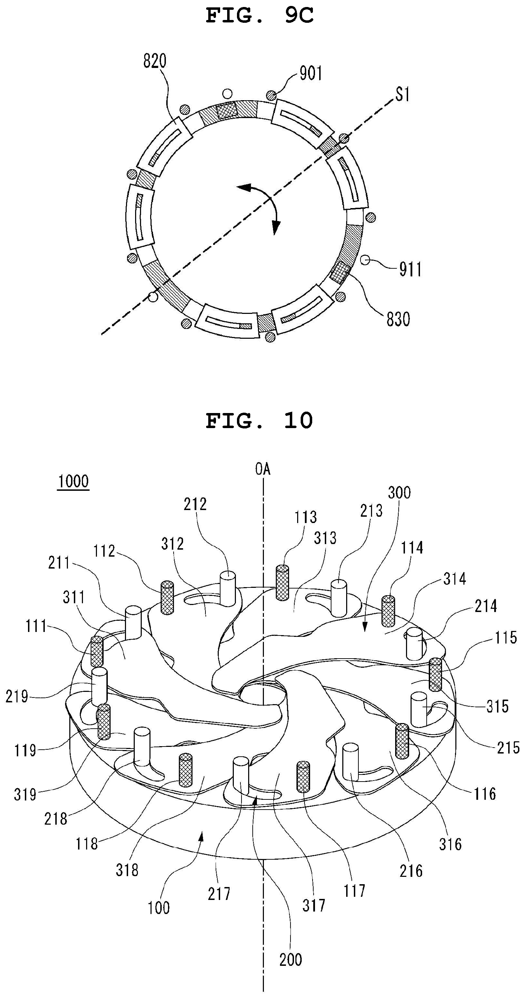

In order to enable the plurality of coils 820 to generate rotational force in the same direction, as shown in FIGs. 9A and 9C, areas in which the N pole 702 and the S pole 701 of the second magnet 700 respectively overlap each of the plurality of coils 820 in a direction parallel to the optical axis need to be equal to those in the other coils 820. In this case, currents may flow through the plurality of coils 820 in the same rotational direction.

Alternatively, as shown in FIG. 9B, two types of coils may be included, such that areas in which the N pole 702 and the S pole 701 respectively overlap one type of coil are opposite those in the other type of coil. In this case, currents may flow through the two types of coils in opposite rotational directions. For example, in FIG. 9C, if currents flow in the clockwise direction through three coils disposed at the same positions as in FIG. 9A, currents may flow in the counterclockwise direction through the remaining three coils. In this case, areas in which the S pole 701 and the N pole 702 of the second magnet 700 respectively overlap each of the remaining three coils may be opposite those in the three coils disposed at the same positions as in FIG. 9A.

In order to achieve such coil arrangement, the plurality of coils 820 may be disposed to be spaced point-symmetrically with respect to the optical axis or may be disposed plane-symmetrically with respect to a plane including the optical axis (or line-symmetrically with respect to a virtual line perpendicular to the optical axis). In addition, in this case, the positions or number of poles of the second magnet 700 may also be taken into consideration.

The number of coils satisfying this condition may correspond to a factor of the number of poles constituting the second magnet 700 (factor being a set of divisors excluding 1 and the number itself). When the number of poles constituting the second magnet 700 is twelve, the factors of twelve are 2, 3, 4, and 6, so the number of coils 820 may be 2, 3, 4, or 6.

The plurality of coils 820 may be disposed as follows. As shown in FIG. 9A, three coils may be disposed point-symmetrically with respect to the optical axis, with an angle θ3 (120 degrees) between adjacent coils. As shown in FIG. 9B, four coils may be disposed point-symmetrically with respect to the optical axis, with an angle θ4 (90 degrees) between adjacent coils or may be disposed line-symmetrically with respect to a plane S1. As shown in FIG. 9C, the coils may be disposed line-symmetrically with respect to a plane S2.

Hereinafter, the relationship between the plurality of coils 820, the fixed shafts 901, and the rolling members will be described.

As shown in FIG. 5C, the guide grooves receiving the rolling members 911 are disposed in first spaces 910 among the plurality of spaces defined by adjacent fixed shafts 901, and the coils are disposed in second spaces 920 among the plurality of spaces. Therefore, the plurality of coils 820, the fixed shafts 901, and the rolling members may not overlap each other in the z-axis direction.

In addition, as described above, the plurality of coils 820 is provided in a number corresponding to a factor of the number of poles constituting the second magnet 700 and is disposed point-symmetrically with respect to the optical axis or line-symmetrically with respect to a plane including the optical axis. The fixed shafts 901 and the rolling members 911 are also disposed point-symmetrically with respect to the optical axis.

As a result, the rolling members 911 may be disposed in the spaces, among the spaces defined between the plurality of fixed shafts 901 (the number of spaces being equal to the number of fixed shafts 901), that are point-symmetric with respect to the optical axis, and the plurality of coils 820 may be disposed point-symmetrically or line-symmetrically in at least some of the remaining spaces.

The number of fixed shafts 901 satisfying this condition may be a value obtained by multiplying the number of rolling members 911 by a natural number of 2 or greater, and the number of coils 820 may be a value among the factors of the number of poles of the second magnet 700 that is equal to a value obtained by subtracting the number of rolling members 911 from the number of fixed shafts 901.

However, the above conditions may apply to a case in which only the number of magnet units 710 constituting the second magnet 700 is changed while the design conditions of the other components remain the same. Therefore, if the stator 900 is designed, for example, with an increased diameter such that the plurality of coils 820 is not disposed in the spaces (second spaces 920) between the fixed shafts 901, it is not necessarily required to satisfy the above conditions.

It may be advantageous that the number of rolling members 911 be at least three in order to enable the movable unit 500-2 to smoothly rotate within the fixed unit 500-3.

For example, when the number of poles of the second magnet 700 is twelve (factors of which are 2, 3, 4, and 6) and when the number of rolling members 911 is three, the number of fixed shafts 901 (number of rolling members 911 × natural number of 2 or greater) may be six, nine, or twelve, and the value obtained by subtracting the number of rolling members 911 from the number of fixed shafts 901 is 3, 6, or 9. Therefore, the number of coils 820 may be three or six (refer to FIGs. 9A and 9C).

For example, when the number of poles of the second magnet 700 is twelve (factors of which are 2, 3, 4, and 6) and when the number of rolling members 911 is four, the number of fixed shafts 901 (number of rolling members 911 × natural number of 2 or greater) may be eight or twelve, and the value obtained by subtracting the number of rolling members 911 from the number of fixed shafts 901 is 4 or 8. Therefore, the number of coils 820 may be four (refer to FIG. 8B).

Accordingly, when the number of poles of the second magnet 700 is twelve, the number of fixed shafts 901 may be eight or nine, and the number of rolling members 911 may be three or four. As long as the above conditions are satisfied, the design of the iris module 500 (e.g., the number or positions of the plurality of coils 820, the fixed shafts 901, and the rolling members 911) may be more variously modified.

As such, in the embodiment of the present disclosure, the positions of the first magnets 31 and the poles of the second magnet 700 may be appropriately adjusted by adjusting the number of poles of the second magnet 700, thereby cancelling magnetic field interference. This enables smooth operation of the iris module 500.

In addition, according to the embodiment, it is possible to secure diversity in the number or positions of the plurality of coils 820, the fixed shafts 901, and the rolling members 911 inside the iris module 500 by increasing the number of poles of the second magnet 700, thereby increasing the freedom of the design of the iris module 500.

The iris module 500 and the lens moving apparatus 10 according to the embodiment of the present disclosure are not limited to the above-described configuration. That is, the iris module 500 and the lens moving apparatus 10 according to the embodiment may also be applied to an iris module 500 having a configuration different from that described above.

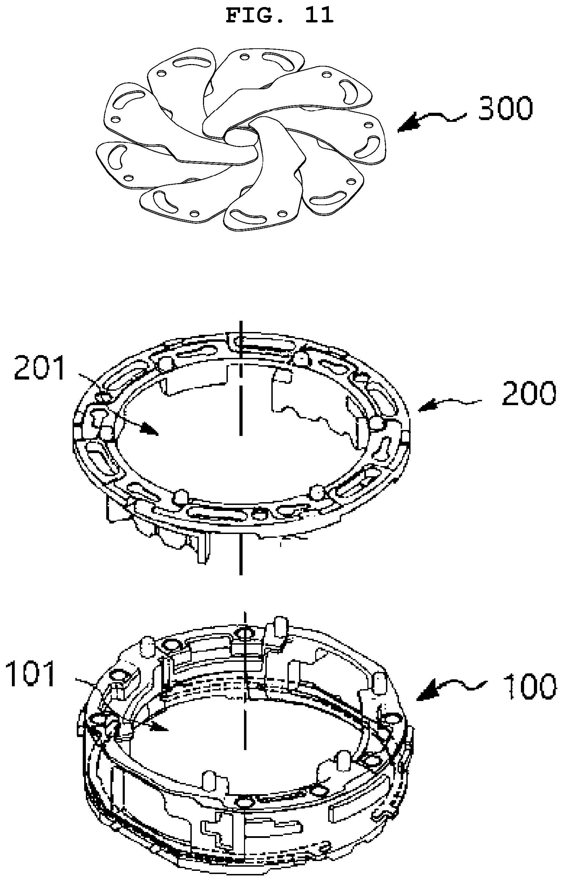

FIG. 10 is a perspective view showing the configuration of the iris module according to the present disclosure, and FIG. 11 is an exploded perspective view showing the configuration of the iris module according to the present disclosure.

The iris module according to the present disclosure includes a support unit 100, a rotor 200, and a blade unit 300 that are sequentially stacked.

The support unit 100 includes a first opening 101 that overlaps a lens (not shown) and supports the rotor 200 and the blade unit 300.

The rotor 200 is disposed on the support unit 100 so as to rotate about the optical axis OA. The rotor 200 includes a second opening 201 that overlaps the lens and the first opening 101 and supports the blade unit 300.

The blade unit 300 includes nine blades that are disposed in a direction perpendicular to the optical axis OA in three layers so as to rotate in conjunction with rotation of the rotor 200, thereby forming a light-incident aperture that varies in size.

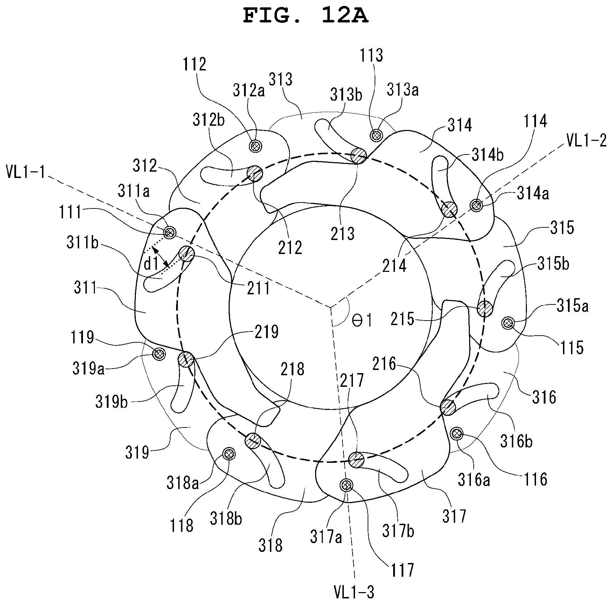

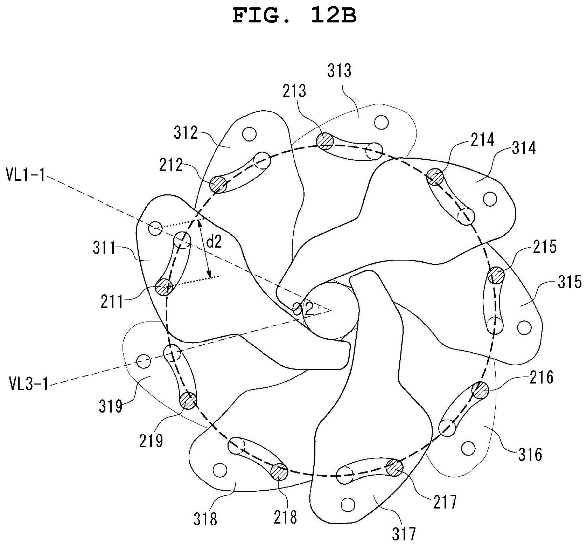

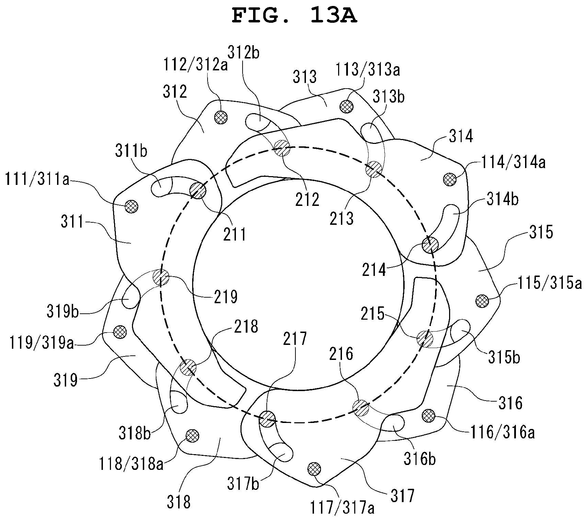

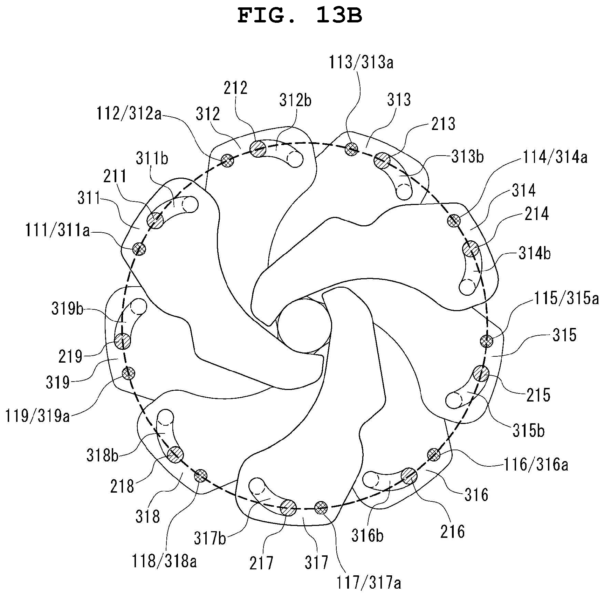

FIG. 11 is a perspective view showing the blade unit formed in three layers in the iris module according to the present disclosure, and FIGs. 12A and 12B are exemplary views showing the operational state of the blade unit in the iris module according to an embodiment of the present disclosure. FIGs. 13A and 13B are exemplary views showing the operational state of the blade unit in the iris module according to another embodiment of the present disclosure. The shape of the blades of the first embodiment shown in FIGs. 12A and 12B differs from the shape of the blades shown in FIGs. 13A and 13B only in the positions of the rotation-shaft holes 311a to 319a and the driving-shaft holes 311b to 319b. The plurality of driving shafts 211 to 219 formed on the rotor 200 moves along the driving-shaft holes 311b to 319b according to counterclockwise rotation of the rotor 200, thereby rotating the respective blades 311 to 319. That is, although the two embodiments differ from each other in the positions of the rotation-shaft holes and the driving-shaft holes, the operation mechanisms thereof are identical.

FIG. 12A shows a state in which the blade unit 300 forms a maximum light-incident aperture, and FIG. 12B shows a state in which the blade unit 300 forms a minimum light-incident aperture.

Each of the blades 311 to 319 is formed such that an inner surface of a blade body adjacent to the optical axis has a curved portion and an outer surface of the blade body has at least one inflected portion.

The plurality of blades 311 to 319 includes blocking sections, which block the light-incident aperture by rotating about the rotation shafts 111 to 119 that protrude from the support unit 100 and are inserted into the rotation-shaft holes 311a to 319a, and driving sections, in which the driving shafts 211 to 219 of the rotor 200 that are inserted into and rotated in the driving-shaft holes 311b to 319b move along slits defined by the driving-shaft holes 311b to 319b.

When viewed in the optical-axis direction, the first to ninth blades 311 to 319 are sequentially disposed in the clockwise direction. As shown in FIG. 12A, in each layer, for example, in the top layer 300-3L, three blades 311, 314, and 317 may be disposed in a direction perpendicular to the optical axis such that an angle θ1 between a plurality of virtual lines VL1-1, VL1-2, and VL1-3 that connect the respective rotation-shaft holes 311a, 314a, and 317a to the optical axis is 120°.

As shown in FIG. 12B, two blades 311 and 319 adjacent to each other in different layers 300-3L and 300-1L in the optical-axis direction may be disposed such that an angle θ2 between the virtual line VL1-1 connecting the rotation-shaft hole 311a in the blade 311 in the top layer 300-3L to the optical axis and the virtual line VL3-1 connecting the rotation-shaft hole 319a in the blade 319 in the bottom layer 300-1L to the optical axis is in a range from 35° to 45°. If the blades in all the layers 300-1L to 300-3L are disposed at regular intervals, an angle between the plurality of virtual lines may be 40°.

An angle between the blade 313 in the bottom layer 300-1L and the blade 312 in the middle layer 300-2L may be 35°, and an angle between the blade 312 in the middle layer 300-2L and the blade 311 in the top layer 300-1L may be 40°. That is, an angular interval between the bottom layer 300-1L and the middle layer 300-2L and an angular interval between the middle layer 300-2L and the top layer 300-3L may be slightly different from each other. If actuators are designed to be inserted between the rotation-shaft holes 311a to 319a in the respective blades 311 to 319 and the driving shafts 211 to 219 inserted into the driving-shaft holes 311b to 319b, the driving shafts between the blades may be formed at a position shifted by approximately 5°. Accordingly, the freedom of the design of the actuator structure may be enhanced. However, if the interval difference exceeds 5°, no overlap regions may be present between the blades in the upper layer and the blades in the lower layer, and the blades may interfere with each other, resulting in malfunction of the iris.

In this case, three blades disposed in a direction perpendicular to the optical axis in the same layer do not overlap each other in the optical-axis direction throughout the entire rotational range. That is, the third blade 313, the sixth blade 316, and the ninth blade 319 in the first layer 300-1L, which is the bottom layer, do not overlap each other when they rotate counterclockwise from the maximum light-incident aperture state shown in FIG. 12A to the minimum light-incident aperture state shown in FIG. 12B during the iris operation. This equally applies to the rotation of the second blade 312, the fifth blade 315, and the eighth blade 318 in the middle layer 300-2L and to the rotation of the first blade 311, the fourth blade 314, and the seventh blade 317 in the top layer 300-3L.

Meanwhile, each of the blades disposed in an upper layer may overlap two of the blades disposed in a lower layer and may be supported by the two blades at all times. For example, the first blade 311 in the top layer 300-3L partially overlaps the second blade 312 and the eighth blade 318 in the middle layer 300-2L in a vertical direction and is supported by the two blades 312 and 318 at all times. The fourth blade 314 in the top layer 300-3L partially overlaps the second blade 312 and the fifth blade 315 in the middle layer 300-2L in the vertical direction and is supported by the two blades 312 and 315 at all times. The seventh blade 317 in the top layer 300-3L partially overlaps the fifth blade 315 and the eighth blade 318 in the middle layer 300-2L in the vertical direction and is supported by the two blades 315 and 318. Similarly, the second blade 312 in the middle layer 300-2L partially overlaps the third blade 313 and the ninth blade 319 in the bottom layer 300-1L in the vertical direction and is supported by the two blades 313 and 319. The fifth blade 315 in the middle layer 300-2L partially overlaps the third blade 313 and the sixth blade 316 in the bottom layer 300-1L in the vertical direction and is supported by the two blades 313 and 316 at all times. The eighth blade 318 in the middle layer 300-2L partially overlaps the sixth blade 316 and the ninth blade 319 in the bottom layer 300-1L in the vertical direction and is supported by the two blades 316 and 319.

To ensure support, blades in different layers need to overlap each other under all conditions regardless of the size of the light-incident aperture. Interference during operation refers to a situation in which a blade that should remain in one layer lifts upward or sags downward and interferes with a blade in another layer. Blades in the same layer do not overlap each other.

As shown in FIGs. 12A and 13A, when the light-incident aperture formed by the nine blades 311 to 319 has the maximum size, a separation distance d1 between the rotation-shaft holes 311a to 319a and the driving-shaft holes 311b to 319b in the respective blades 311 to 319 is the shortest.

As shown in FIGs. 12B and 13B, when the light-incident aperture formed by the nine blades 311 to 319 has the minimum size, a separation distance d2 between the rotation-shaft holes 311a to 319a and the driving-shaft holes 311b to 319b in the respective blades 311 to 319 is the longest.

When the amount of light incident on the lens is at a maximum, the amount of light incident on the lens may be determined by the inner surfaces of the respective blades 311 adjacent to the rotation-shaft holes 311a to 319a. As the amount of light incident on the lens decreases from the maximum, the amount of light incident on the lens may be determined by the inner surfaces of the respective blade bodies adjacent to the optical axis.

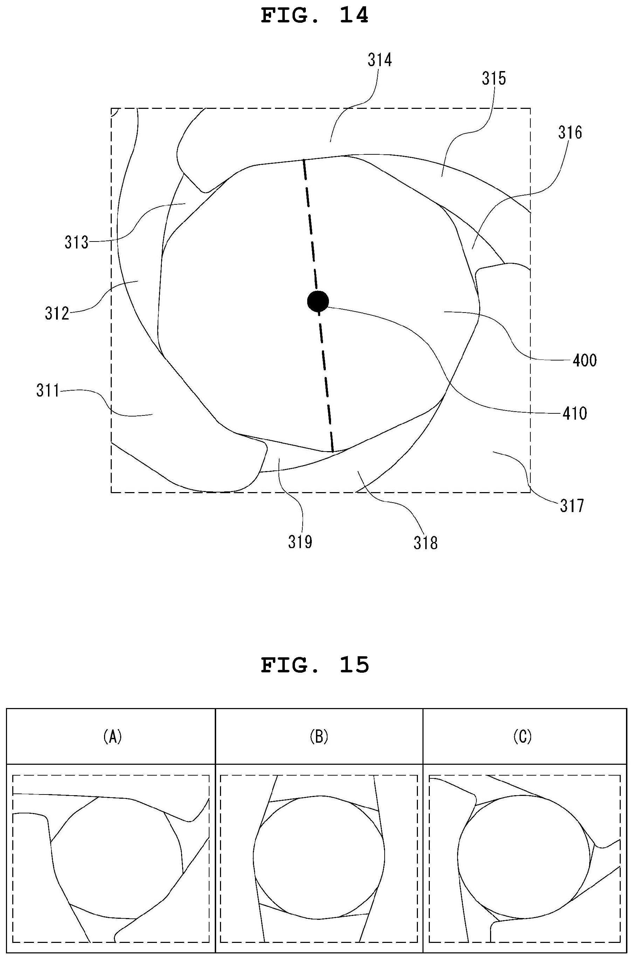

FIG. 14 is an exemplary view showing the shape of the light-incident aperture formed by the iris module according to the present disclosure. As shown, the light-incident aperture 400 formed by the nine blades 311 to 319 has a nonagonal shape defined by the inner surfaces of the nine blades. A light-incident aperture formed by an iris including an even number of blades, such as four, six, or eight blades, exhibits point symmetry with respect to the center point thereof, whereas the shape of the light-incident aperture 400 formed by the iris module according to the present disclosure is asymmetric with respect to the center point 410 thereof. Accordingly, an effect of making a diffraction phenomenon appear less prominent may be exhibited.

FIG. 15 is an exemplary view showing various shapes of a light-incident aperture according to configurations of blades constituting an iris module. (A) shows a light-incident aperture formed by an iris including six blades disposed in two layers, (B) shows a light-incident aperture formed by an iris including eight blades disposed in five layers, and (C) shows a light-incident aperture formed by an iris including nine blades disposed in three layers, as in the present disclosure.

Although designing long blades is advantageous for forming a circular aperture, it is required to avoid overlap between blades in the same layer. For this reason, if eight blades are divided and arranged into two layers such that four blades are disposed in each layer, the blades become short, making it difficult to form a circular aperture. Therefore, an iris module including eight blades, two of which are disposed in each of four layers, is implemented. However, the configuration in which two blades are disposed in each of the four layers causes interference between the second layer and the third layer, requiring placement of an intermediate support layer therebetween.

In contrast, the iris according to the present disclosure is configured such that nine blades are divided and arranged into three layers, thereby enabling the implementation of a desired target focus (F#) and representing variation in the depth of field of a subject depending on the F value. Under the same design conditions, an iris including nine blades may implement a light-incident aperture that is much closer to a circular shape.

As described above, in the iris module according to the present disclosure, nine blades are divided such that three blades are disposed in each of three layers without overlapping each other, thereby implementing a substantially circular light-incident aperture compared to iris modules including six or eight blades. In addition, because the blades are arranged asymmetrically with respect to the center of the light-incident aperture, an effect of making a diffraction phenomenon appear less prominent may be exhibited.

Although the present disclosure has been particularly described with reference to the exemplary embodiments, it is to be understood by those skilled in the art that various modifications or changes can be made without departing from the technical spirit and scope of the present disclosure as disclosed in the accompanying claims.

### [Industrial Applicability]

An embodiment of the present invention may be applied to a diaphragm module capable of minimizing a diffraction phenomenon, and to a camera module including the same.

## Claims

1. A camera module, comprising:
an iris module,
wherein the iris module includes:
a coil unit including a plurality of coils;
a fixed unit having the coil unit disposed thereon;
a ring magnet disposed to face the coil unit, the ring magnet being configured to rotate about a first axis through interaction with the coil unit;
a movable unit having the ring magnet disposed thereon; and
a blade unit coupled to the fixed unit and the movable unit, the blade unit forming a variable aperture,
wherein the ring magnet includes a plurality of N poles and a plurality of S poles alternately disposed,
wherein the blade unit includes a plurality of blade layers stacked in a direction parallel to the first axis,
wherein each of the plurality of blade layers includes a plurality of blades,
wherein a number of the plurality of coils is greater than a number of the plurality of blade layers,
wherein a sum of a number of the plurality of N poles and a number of the plurality of S poles is greater than the number of the plurality of coils, and
wherein the number of the plurality of coils, the number of the plurality of N poles, and the number of the plurality of blade layers are multiples of three.

2. The camera module according to claim 1, further comprising a plurality of first magnet units disposed outside the iris so as to be spaced apart from each other when viewed in top view,
wherein the number of the plurality of S poles is not equal to a product of a number of the plurality of first magnet units and a natural number.

3. The camera module according to claim 1, wherein the number of the plurality of coils is one of factors of the sum of the number of the plurality of N poles and the number of the plurality of S poles (factors being a set of divisors excluding 1 and the sum of the number of the plurality of N poles and the number of the plurality of S poles).

4. The camera module according to claim 1, wherein the fixed unit includes a plurality of fixed shafts spaced apart from each other at regular angular intervals with respect to the first axis,
wherein the movable unit includes a plurality of moving shafts spaced apart from each other at regular angular intervals with respect to the first axis, and
wherein each of the plurality of blades includes a fixed-shaft hole coupled to a corresponding one of the plurality of fixed shafts and a moving-shaft hole coupled to a corresponding one of the plurality of moving shafts.

5. The camera module according to claim 4, wherein the blade unit includes three blade layers, and
wherein each of the three blade layers includes three blades disposed point-symmetrically with respect to the first axis.

6. The camera module according to claim 4, further comprising a rolling member disposed between the fixed unit and the movable unit,
wherein the plurality of coil units is disposed in a first space among a plurality of spaces defined between the plurality of fixed shafts, and
wherein the rolling member is disposed in a second space other than the first space among the plurality of spaces.

7. The camera module according to claim 4, further comprising a rolling member disposed between the fixed unit and the movable unit,
wherein the rolling member, the plurality of coils, and the plurality of fixed shafts do not overlap each other in a direction parallel to the first axis.

8. The camera module according to claim 4, wherein the variable aperture formed by the blade unit increases in size as a distance between the plurality of moving shafts and the plurality of fixed shafts coupled to the plurality of blades decreases.

9. The camera module according to claim 3, further comprising rolling members disposed between the fixed unit and the movable unit,
wherein a sum of the number of the plurality of coils and a number of the rolling members is included in the factors of the sum of the number of the plurality of N poles and the number of the plurality of S poles.

10. The camera module according to claim 3, wherein the movable unit includes a protruding portion disposed outside the ring magnet, the protruding portion having an inner surface including a flat surface, and
wherein the ring magnet includes a flat portion formed on an outer circumferential surface thereof, the flat portion facing the inner surface of the protruding portion.

11. The camera module according to claim 3, wherein the plurality of coils is disposed symmetrically with respect to a virtual plane including the first axis.

12. The camera module according to claim 11, wherein the coil unit includes:
a substrate having the plurality of coils disposed thereon; and
a plurality of position sensors disposed on the substrate, and
wherein the plurality of position sensors is disposed asymmetrically with respect to the first axis.

13. The camera module according to claim 12, further comprising a ring-shaped yoke disposed between the second magnet and the movable unit.

14. The camera module according to claim 1, wherein the sum of the number of the plurality of N poles and the number of the plurality of S poles is twelve, and the number of the plurality of coils is six.

15. A camera device, comprising:
an iris module,
wherein the iris module includes:
a coil unit including a plurality of coils, a substrate having the plurality of coils disposed thereon, and a plurality of position sensors disposed on the substrate;
a fixed unit having the coil unit disposed thereon;
a ring-shaped ring magnet disposed to face the coil unit, the ring magnet being configured to rotate about a first axis through interaction with the coil unit;
a movable unit having the ring magnet disposed thereon;
a blade unit coupled to the fixed unit and the movable unit, the blade unit forming a variable aperture; and
a ring-shaped yoke disposed between the ring magnet and the movable unit,
wherein the plurality of position sensors is disposed asymmetrically with respect to the first axis,
wherein the ring magnet includes a plurality of N poles and a plurality of S poles alternately disposed,
wherein the blade unit includes a plurality of blade layers stacked in a direction of the first axis, the plurality of blade layers each including a plurality of blades,
wherein a number of the plurality of coils is greater than a number of the plurality of blade layers and is one of factors of a sum of a number of the plurality of N poles and a number of the plurality of S poles (factors being a set of divisors excluding 1 and the sum of the number of the plurality of N poles and the number of the plurality of S poles), and
wherein a sum of the number of the plurality of coils, the number of the plurality of N poles, and the number of the plurality of S poles is a multiple of the number of the plurality of coils.
